(19) Europäisches Patentamt
European Patent Office
Office européen des brevets

(11) **EP 3 767 552 A1**

(12) **EUROPEAN PATENT APPLICATION**

(43) Date of publication:
**20.01.2021 Bulletin 2021/03**

(51) Int Cl.:
***G06N 3/08*** (2006.01)

(21) Application number: **20184191.3**

(22) Date of filing: **06.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.07.2019 JP 2019129414**

(71) Applicant: **FUJITSU LIMITED**
**Kanagawa 211-8588 (JP)**

(72) Inventors:
• **Yasutomi, Suguru**
**Kanagawa, 211-8588 (JP)**
• **Katoh, Takashi**
**Kanagawa, 211-8588 (JP)**
• **Uemura, Kento**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **MACHINE LEARNING METHOD, PROGRAM, AND MACHINE LEARNING DEVICE**

(57) A machine learning method includes: calculating, by a computer, a first loss function based on a first distribution and a previously set second distribution, the first distribution being a distribution of a feature amount output from an intermediate layer when first data is input to an input layer of a model that has the input layer, the intermediate layer, and an output layer; calculating a second loss function based on second data and correct data corresponding to the first data, the second data being output from the output layer when the first data is input to the input layer of the model; and training the model based on both the first loss function and the second loss function.

FIG. 3

EP 3 767 552 A1

**Description**

FIELD

The embodiments discussed herein are related to a machine learning method, a program, and a machine learning device.

BACKGROUND

Up to now, a method of suppressing over fitting of a deep neural network (DNN) has been proposed. The over fitting is a phenomenon where, when the amount of training data is low, a classification model may precisely classify only the training data, and a generalization performance decreases. For example, as a method of avoiding the over fitting, a method for reducing the numbers of layers and units of the DNN to simplify the model has been proposed.

Related techniques are disclosed in, for example, Japanese Laid-open Patent Publication No. 2-307153, Japanese Laid-open Patent Publication No. 5-197701, and Japanese Laid-open Patent Publication No. 2017-97585.

However, according to the aforementioned method, an issue occurs that an expression capability of the model decreases in some cases. For example, when the number of parameters of the DNN for classifying data into multiple classes is reduced, approximation of a boundary surface between respective classes is not performed at a desired precision in some cases. A complexity of the model and the expression capability are in a relationship of trade-off.

According to one aspect, it is aimed at suppressing a decrease of the expression capability of the model and increasing the generalization performance.

SUMMARY

According to an aspect of the embodiments, a machine learning method includes: calculating, by a computer, a first loss function based on a first distribution and a previously set second distribution, the first distribution being a distribution of a feature amount output from an intermediate layer when first data is input to an input layer of a model that has the input layer, the intermediate layer, and an output layer; calculating a second loss function based on second data and correct data corresponding to the first data, the second data being output from the output layer when the first data is input to the input layer of the model; and training the model based on both the first loss function and the second loss function.

According to one aspect, it is possible to suppress the decrease of the expression capability of the model and increase the generalization performance.

BRIEF DESCRIPTION OF DRAWINGS

FIG. 1 illustrates an example of a functional configuration of a machine learning device according to a first embodiment;
FIG. 2 is a diagram for describing a model;
FIG. 3 is a diagram for describing training processing according to a first embodiment;
FIG. 4 is a flowchart illustrating a flow of a training processing according to a first embodiment;
FIG. 5 is a diagram for describing a feature space according to a related art technology;
FIG. 6 is a diagram for describing a feature space according to a first embodiment;
FIG. 7 illustrates an experiment result;
FIG. 8 is a diagram for describing a training processing according to a second embodiment;
FIG. 9 illustrates an example of a mixture distribution;
FIG. 10 is a diagram illustrating an example of a feature space according to a second embodiment;
FIG. 11 is a flowchart illustrating a flow of a training processing according to a second embodiment;
FIG. 12 is a flowchart illustrating a flow of a training processing according to a third embodiment; and
FIG. 13 is a diagram for describing an example of a hardware configuration.

DESCRIPTION OF EMBODIMENTS

Embodiments will be described in detail below with reference to the drawings. The embodiments do not limit the present invention. Respective embodiments may be combined with each other as appropriate without contradiction.

[First Embodiment]

A machine learning device performs training of model. The model according to a first embodiment is a model using a DNN having an input layer, an intermediate layer, and an output layer. For example, the model is a classification model for classifying an image. In this case, the model uses image data as an input, and outputs a score or the like for classifying a subject depicted in the image.

[Functional Configuration]

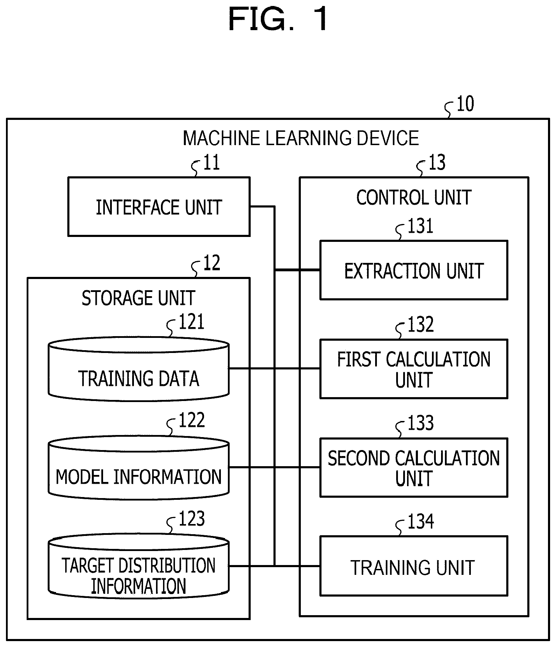

A functional configuration of a machine learning device according to the first embodiment is described with reference to FIG. 1. FIG. 1 illustrates an example of the functional configuration of the machine learning device according to the first embodiment. As illustrated in FIG. 1, a machine learning device 10 includes an interface unit 11, a storage unit 12, and a control unit 13.

The interface unit 11 is an interface for inputting and outputting data to and from an input/output device, and performing data communication with other devices. For example, the interface unit 11 performs an input and an output of data with an input device such as a keyboard and a mouse, an output device such as a display and a speaker, and an external storage device such as a universal serial bus (USB) memory. For example, the interface unit 11 is a network interface card (NIC), and performs data communication via the Internet.

The storage unit 12 is an example of a storage device which stores data and a program to be executed by the control unit 13 and is, for example, a hard disk, a memory, or the like. The storage unit 12 stores training data 121, model information 122, and target distribution information 123.

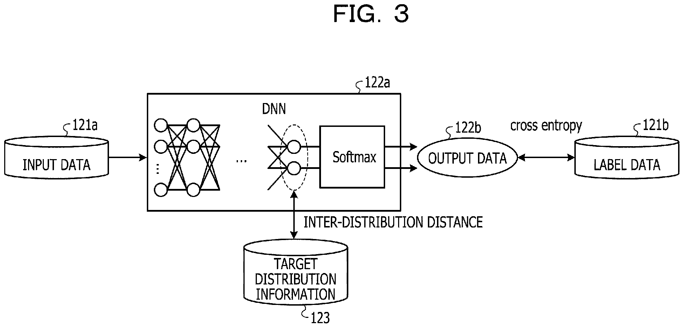

The training data 121 is data for performing training of the model. The training data 121 includes input data 121a and label data 121b illustrated in FIG. 3. The input data 121a is image data itself, or a predetermined feature amount extracted from the image data. The label data 121b is a correct label for the input data 121a. For example, the label data 121b is information for identifying an object depicted in the image corresponding to the input data 121a.

The model information 122 is information for constructing the model. The model information 122 includes, for example, parameters such as a weight and a bias of each of nodes included in the DNN. The model information 122 is updated by the training.

The target distribution information 123 includes parameters representing a previously set particular distribution. A distribution represented by the target distribution information 123 is referred to as a target distribution. For example, when the target distribution is a Gaussian distribution, the target distribution information 123 includes an average and a covariance matrix for representing the Gaussian distribution.

For example, in training processing, an inter-distribution distance between the target distribution and a distribution of data output from the intermediate layer of the model is used as a part of a loss function. In the training processing, the parameters of the model are updated for approximating the target distribution and the distribution of the data output from the intermediate layer to each other. A detail of the training processing will be described later.

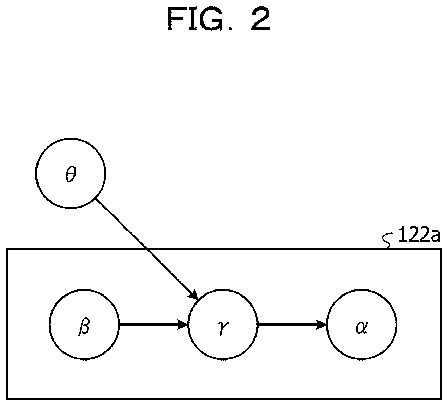

The model according to the first embodiment is described with reference to FIG. 2. FIG. 2 is a diagram for describing the model. A model 122a of FIG. 2 is a DNN constructed based on the model information 122. Where $\alpha$ denotes input data 121a to be input to the input layer of the model. $\beta$ denotes output data to be output from the model. $\gamma$ denotes a feature amount to be output from the intermediate layer of the model. $\theta$ denotes the target distribution information 123. The machine learning device 10 trains the model 122a such that a distribution of the feature amount $\gamma$ is approximated to the target distribution denoted by $\theta$.

The control unit 13 is implemented when, for example, a central processing unit (CPU), a micro processing unit (MPU), or a graphics processing unit (GPU) executes a program that is stored in an internal storage device by using a random-access memory (RAM) as a work area. The control unit 13 may also be implemented, for example, by an integrated circuit, such as an application-specific integrated circuit (ASIC) or a field-programmable gate array (FPGA). The control unit 13 includes an extraction unit 131, a first calculation unit 132, a second calculation unit 133, and a training unit 134.

The extraction unit 131 extracts, from the image data, the feature amount to be input to the input layer of the model. For example, the extraction unit 131 extracts the feature amount in which a feature of each of areas of the image is represented by a vector having a predetermined size. The extraction unit 131 may store the extracted feature amount in the storage unit 12 as the input data 121a of the training data 121.

The first calculation unit 132 calculates a first loss function based on the previously set target distribution and the distribution of the feature amount which is output from the intermediate layer when the input data 121a is input to an input layer of a DNN. The DNN is an example of the model having an input layer, an intermediate layer, and an output layer. The DNN is constructed based on the model information 122. The input data 121a is an example of the first data. The target distribution is an example of the second distribution. As described above, the target distribution is represented by the target distribution information 123.

The second calculation unit 133 calculates a second loss function based on correct data corresponding to the input data 121a and the second data that is output from the output layer when the input data 121a is input to the input layer of the DNN.

The training unit 134 trains the model based on both the first loss function and the second loss function. For example, the training unit 134 trains the model by an error back propagation method based on a loss function obtained by adding the first loss function and the second loss function.

The training processing is described with reference to FIG. 3. FIG. 3 is a diagram for describing the training processing according to the first embodiment. As illustrated in FIG. 3, the model 122a serving as the DNN constructed based on the model information 122 includes multiple intermediate layers, and also includes a softmax function (denoted as Softmax in the drawing) as an activating function. The machine learning device 10 inputs the input data 121a to the model 122a. The input data 121a may be a mini batch.

The first calculation unit 132 calculates a loss function based on the target distribution and the distribution of the feature amount which is output from an intermediate layer that is the closest to an output layer when the input data 121a is input to an input layer of the DNN having an input layer, multiple intermediate layers, and an output layer serving as an activating function.

For example, the first calculation unit 132 calculates, as the loss function, an inter-distribution distance between the distribution represented by the target distribution information 123 and the distribution of the feature amount which is output from the intermediate layer that is the closest to the output layer of the model 122a.

For example, the inter-distribution distance is a Kullback-Leibler (KL) divergence, a maximum mean discrepancy (MMD), or the like. When the target distribution is a Gaussian distribution or the like, the first calculation unit 132 may calculate the KL divergence using a statistic in the mini batch. The first calculation unit 132 may calculate the MMD using data sampled from the target distribution.

The second calculation unit 133 calculates, as the loss function, the cross entropy of the output data 122b of the model 122a relative to the label data 121b included in the training data 121. The training unit 134 updates the parameters of the model 122a based on the loss function calculated by the first calculation unit 132 and the loss function calculated by the second calculation unit 133. The inter-distribution distance calculated by the first calculation unit 132 may be regarded as information for performing regularization such that the feature amount output from the intermediate layer follows the target distribution.

It is assumed that the input data 121a is set as a mini batch including n pieces of data. Then, a feature amount z output from the intermediate layer is represented by Expression (1).

$$z = \{z_1, \ldots, z_n\} \quad \cdots (1)$$

Here, m pieces of data z* sampled from the target distribution is represented by Expression (2).

$$z^* = \{z_1^*, \ldots, z_m^*\} \quad \cdots (2)$$

Here, a Gaussian kernel k(x, x') of x and x' is represented by Expression (3). Where σ is assigned as a hyperparameter.

$$k(x, x') = \exp\left[-\frac{\|x - x'\|^2}{2\sigma^2}\right] \quad \cdots (3)$$

In this case, the first calculation unit 132 calculates the inter-distribution distance MMD(z, z*) as in Expression (4).

$$\text{MMD}(z, z^*) = \frac{1}{n^2} \sum_{i,j=1}^{n} k(z_i, z_j) + \frac{1}{m^2} \sum_{i,j=1}^{m} k(z_i^*, z_j^*) + \frac{2}{mn} \sum_{i=1}^{n} \sum_{j=i}^{m} k(z_i, z_j^*) \quad \cdots (4)$$

When the cross entropy calculated by the second calculation unit 133 is set as $L_{output}$ and λ is set as a weight assigned as a hyperparameter, the training unit 134 calculates an overall loss function L as in Expression (5).

$$L = L_{output} + \lambda \text{MMD}(z, z^*) \quad \cdots (5)$$

[Processing Flow]

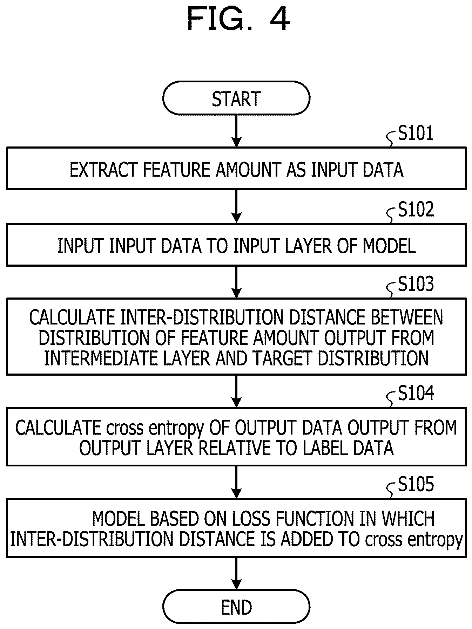

A flow of the training processing by the machine learning device 10 according to the first embodiment is described with reference to FIG. 4. FIG. 4 is a flowchart illustrating the flow of the training processing according to the first embodiment. As illustrated in FIG. 4, first, the machine learning device 10 extracts the feature amount, as the input data 121a, from the image data (step S101). Next, the machine learning device 10 inputs the input data 121a to the input layer of the model (step S102).

The machine learning device 10 calculates an inter-distribution distance between the target distribution and the distribution of the feature amount output from the intermediate layer (step S103). The machine learning device 10 calculates a cross entropy of the output data 122b output from the output layer relative to the label data 121b (step S104). The machine learning device 10 trains a model based on a loss function in which the inter-distribution distance is added to the cross entropy (step S105).

[Advantages]

As described above, the machine learning device 10 calculates the first loss function based on the first distribution and the previously set second distribution. The first distribution is the distribution of the feature amount output from the intermediate layer when the first data is input to the input layer of the model that has the input layer, the intermediate layer, and the output layer. The machine learning device 10 calculates the second loss function based on the correct data corresponding to the first data and the second data that is output from the output layer when the first data is input to the input layer of the model. The machine learning device 10 trains the model based on both the first loss function and the second loss function. The machine learning device 10 avoids the over fitting by approximating the distribution of the feature amount output from the intermediate layer to the target distribution. According to the first embodiment, it is therefore possible to suppress the decrease of the expression capability of the model and increase the generalization performance.

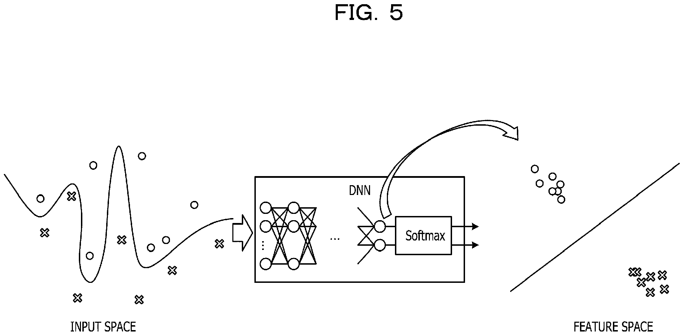

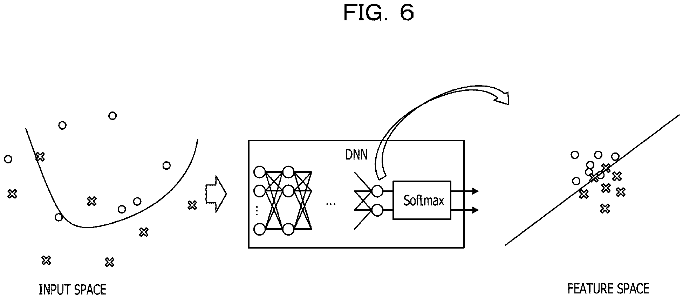

The aforementioned advantages are further described with reference to FIG. 5 and FIG. 6. FIG. 5 is a diagram for describing a feature space according to a related art technology. FIG. 6 is a diagram for describing a feature space according to the first embodiment.

The DNN may be regarded as a model in which data in an input space is mapped into the feature space. As compared with the input space, data may be classified by an undistorted boundary line in the feature space. The boundary line becomes a distorted boundary line by being inversely mapped into the input space. When a degree of this distortion of the boundary line is larger, the generalization performance decreases. As a result, the over fitting occurs.

As illustrated in FIG. 5, according to the related art technology, for example, a boundary line having a shape close to a straight line is generated in the feature space. In other words, for example, the model generates such a feature space that a distance between data of the same class is as close as possible, and a distance between data of different classes is as far as possible. The boundary line has a distorted curved shape by being inversely mapped into the input space. With the aforementioned boundary line, the training data may be classified at a high precision, but classification precision for data other than the training data decreases.

The aforementioned over fitting is suppressed by reducing the number of nodes and layers and simplifying the model. In this case, when sufficient training data does not exist, the model does not fully represent the distribution (under fitting). In reality, sufficient training data may not be prepared in some cases.

According to the first embodiment, as illustrated in FIG. 6, the boundary line is deterred to have a distorted shape in the input space. This is because the machine learning device 10 performs the regularization such that the distribution of the data in the feature space is approximated to the target distribution. In other words, for example, the machine learning device 10 avoids the over fitting by performing an adjustment such that the distance between the classes is not too far apart in the feature space. In the example of FIG. 6, the machine learning device 10 performs the regularization such that each data of two classes follows a single Gaussian distribution.

The machine learning device 10 calculates, as the first loss function, a distance between the first distribution and the second distribution. Since the machine learning device 10 calculates a differentiable inter-distribution distance such as a KL divergence or an MMD as the loss function, training may be performed by the error back propagation method.

The machine learning device 10 calculates a first loss function based on a first distribution and a previously set second distribution. The first distribution is a distribution of a feature amount which is output from an intermediate layer that is the closest to an output layer when first data is input to an input layer of a neural network having an input layer, multiple intermediate layers, and an output layer serving as a predetermined activating function. The machine learning device 10 may perform the effective regularization by adjusting the output of the intermediate layer that is the closest to the output layer. The machine learning device 10 may also adjust an output of another intermediate layer, but the advantage for avoiding the over fitting may be reduced in some cases.

For example, the machine learning device 10 trains the model by the error back propagation method based on the loss function obtained by adding the first loss function and the second loss function. The machine learning device 10 may perform the training itself using a related art technique. The machine learning device 10 may apply a predetermined weight to the second loss function.

An experiment using a model where training is performed by the machine learning device 10 according to the first embodiment is described. The model classifies an image of a handwritten numeral for each numeral. The machine learning device 10 performs training of the model using 100 sets from Mixed National Institute of Standards and Technology database (MNIST) (reference URL: http://yann.lecun.com/exdb/mnist/) serving as a data set of handwritten numerals as training data. Since 100 sets are low for the number of training data, this experiment setting is for creating a situation where over fitting is likely to occur. The target distribution is set as a Gaussian distribution.

The DNN in the experiment is a six-layer multilayer perceptron (MLP). The numbers of units in respective intermediate layers of the DNN are 784-1024-512-256-128-64-10. The number of units in the intermediate layer that is the closest to the output layer is 10. The machine learning device 10 performs an adjustment such that an output of this layer having 10 units is approximated to the target distribution. An MMD is used as inter-distribution distance, and λ in Expression (5) is set as 2.

In the experiment, classification precisions of the models for 10,000 sets of test data extracted from MNIST is measured and compared with regard to the related art technology and the embodiment. The regularization is not performed in the related art technology. With regard to the related art technology, the measurement is performed under similar conditions to those of the first embodiment except for the condition related to the regularization.

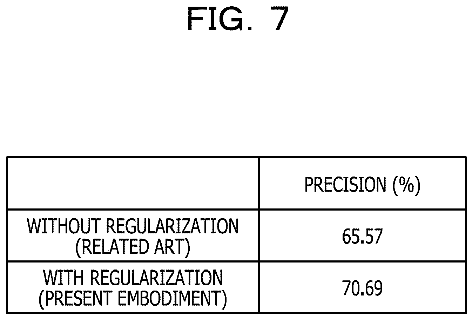

FIG. 7 illustrates an experiment result. As illustrated in FIG. 7, when the regularization is not performed, for example, when the training based on the related art technology is performed, the classification precision of the model was 65.57%. When the regularization is performed, for example, when the training based on the first embodiment is performed, the classification precision of the model was 70.69%. According to the first embodiment, even under a situation where the number of training data is low, an improvement of the precision is realized by the regularization.

[Second Embodiment]

The classification model may classify data into any of multiple classes in some cases. In such a case, a different target distribution may be set for each of the multiple classes. According to a second embodiment, a mixture distribution is used as the target distribution. Respective mixed elements of the mixture distribution are allocated to respective classes classified by the model.

A configuration of the machine learning device 10 according to the second embodiment is similar to that of the first embodiment. The first calculation unit 132 calculates a loss function based on a target distribution set for correct data corresponding to the input data 121a and the distribution of the feature amount which is output from the intermediate layer.

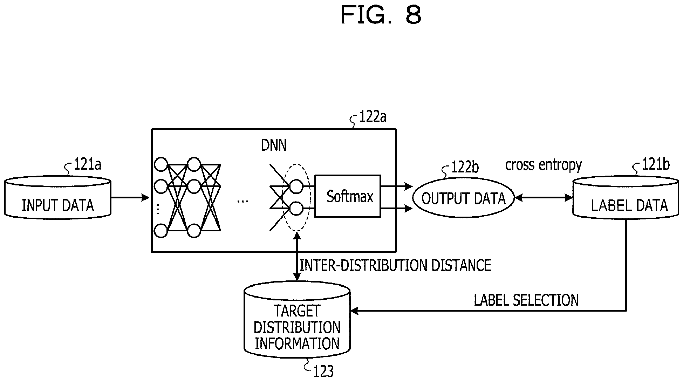

The training processing is described with reference to FIG. 8. FIG. 8 is a diagram for describing the training processing according to the second embodiment. As illustrated in FIG. 8, the machine learning device 10 inputs the input data 121a to the input layer of the model 122a. The first calculation unit 132 selects a label corresponding to the input data 121a from the label data 121b. The first calculation unit 132 calculates, as a loss function, an inter-distribution distance between a distribution indicated by mixed elements corresponding to the selected label and a distribution of data output from the intermediate layer.

A setting method for a mixture distribution is described. A model classifies images into any classes of "dog", "car", and "cat". In this case, as mixed elements of the mixture distribution, a target distribution of a feature amount of the "dog" class, a target distribution of a feature amount of the "car" class, and a target distribution of a feature amount of the "cat" class are prepared.

For example, it is conceivable that as compared with an image of a "car" that is an artifact, an image of a "cat" that is an animal has a closer concept and a similar feature amount to an image of a "dog" that is also an animal. For this reason, the mixture distribution may be represented by Expression (6) and Expression (7) while each mixed element is set as a Gaussian distribution.

$$\frac{1}{3} N(x|\mu_{\text{dog}},\ I) + \frac{1}{3} N(x|\mu_{\text{cat}},\ I) + \frac{1}{3} N(x|\mu_{\text{car}},\ I) \qquad \cdots (6)$$

$$\mu_{\text{dog}} = [1\ 0\ 0]^T, \mu_{\text{cat}} = [0\ 1\ 0]^T, \mu_{\text{car}} = [0\ 0\ 3]^T \qquad \cdots (7)$$

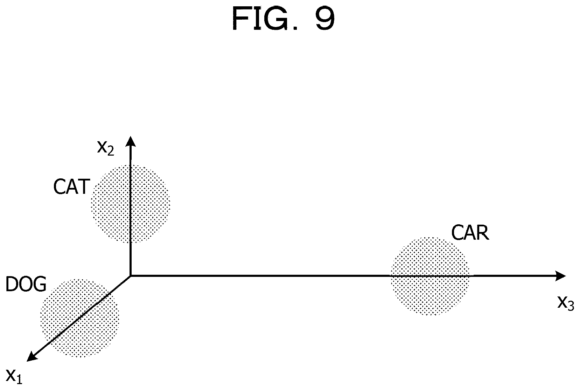

$\mu_{\text{dog}}$ denotes an average of the target distribution corresponding to the "dog" class. $\mu_{\text{car}}$ denotes an average of the target distribution corresponding to the "car" class. $\mu_{cat}$ denotes an average of the target distribution corresponding to the "cat" class. Expression (6) and Expression (7) represent that the target distributions corresponding to the respective classes are Gaussian distributions having different averages and common variances as illustrated in FIG. 9. FIG. 9 illustrates an example of the mixture distribution.

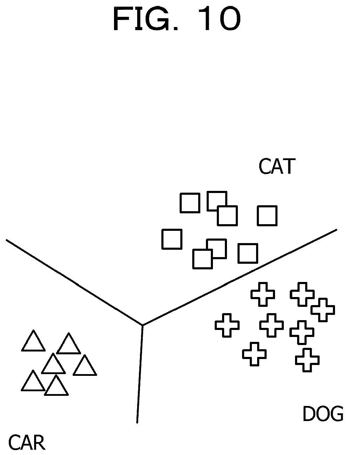

The model where the training is performed under the aforementioned setting is expected to map the input data corresponding to each class into a feature space as illustrated in FIG. 10. FIG. 10 is a diagram illustrating an example of a feature space according to the second embodiment. As illustrated in FIG. 10, the feature amount of the "dog" class and the feature amount of the "cat" class are close to each other as compared with the feature amount of the "car" class. The feature amounts of the respective classes are adjusted not to be too far away from one another.

[Processing Flow]

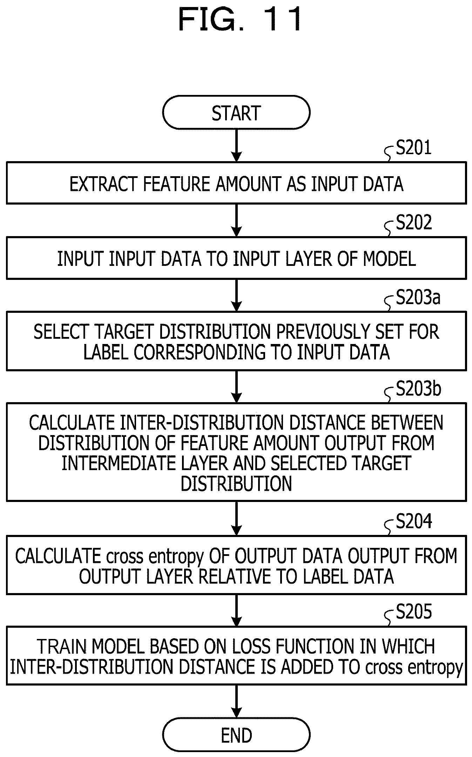

A flow of the training processing by the machine learning device 10 according to the second embodiment is described with reference to FIG. 11. FIG. 11 is a flowchart illustrating the flow of the training processing according to the second embodiment. As illustrated in FIG. 11, first, the machine learning device 10 extracts, as the input data 121a, the feature amount from the image data (step S201). Next, the machine learning device 10 inputs the input data 121a to the input layer of the model (step S202).

The machine learning device 10 selects the target distribution previously set for the label corresponding to the input data 121a (step S203a). The machine learning device 10 calculates an inter-distribution distance between the selected target distribution and the distribution of the feature amount output from the intermediate layer (step S203b). The machine learning device 10 calculates a cross entropy of the output data 122b output from the output layer relative to the label data 121b (step S204). The machine learning device 10 trains a model based on a loss function in which the inter-distribution distance is added to the cross entropy (step S205).

As described above, in the machine learning device 10, the first calculation unit 132 calculates the first loss function based on the first distribution and the second distribution set for the correct data corresponding to the first data among distributions previously set for the respective multiple correct data. When the target distribution consistent with the input data is set, the machine learning device 10 efficiently performs the training, and it is possible to further improve the performance of the model.

[Third Embodiment]

According to a third embodiment, the machine learning device 10 performs semi-supervised training. For example, the machine learning device 10 may perform the training of the model even when training data does not include a label. When a label corresponding to the input data 121a does not exist, the machine learning device 10 performs training of the DNN by error back propagation based on the loss function calculated by the first calculation unit 132.

[Processing Flow]

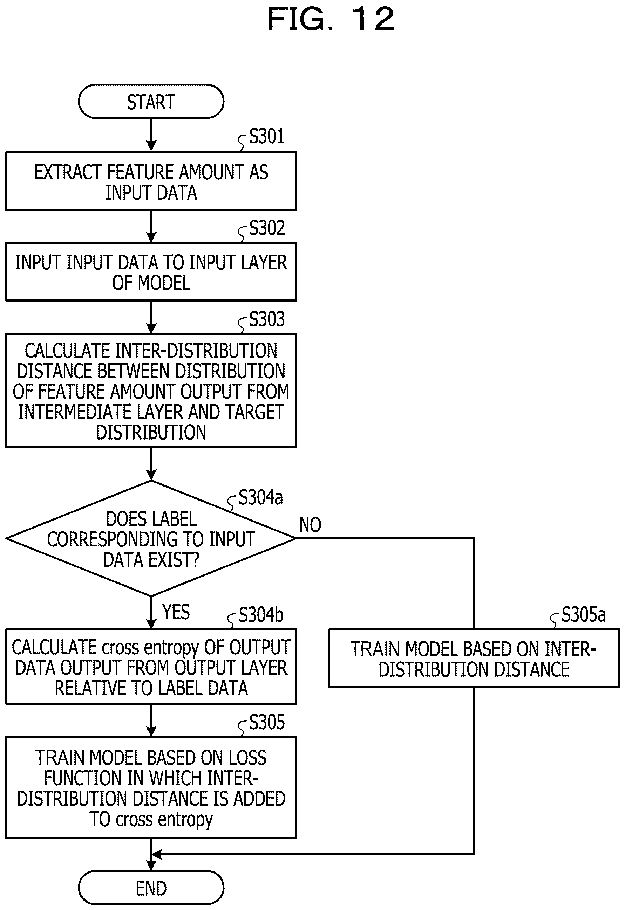

A flow of the training processing by the machine learning device 10 according to the third embodiment is described with reference to FIG. 12. FIG. 12 is a flowchart illustrating the flow of the training processing according to the third embodiment. As illustrated in FIG. 12, first, the machine learning device 10 extracts, as the input data 121a, the feature amount from the image data (step S301). Next, the machine learning device 10 inputs the input data 121a to the input layer of the model (step S302).

The machine learning device 10 calculates an inter-distribution distance between the selected target distribution and the distribution of the feature amount output from the intermediate layer (step S303). The machine learning device 10 determines whether or not the label corresponding to the input data exists (step S304a).

When the label corresponding to the input data exists (step S304a, Yes), the machine learning device 10 calculates a cross entropy of the output data 122b output from the output layer relative to the label data 121b (step S304b). The machine learning device 10 trains a model based on a loss function in which the inter-distribution distance is added to the cross entropy (step S305).

On the other hand, when the label corresponding to the input data does not exist (step S304a, No), the machine learning device 10 trains the model based on the inter-distribution distance (step S305a).

[Advantages]

As described above, the machine learning device 10 trains the model based on only the first loss function when the correct data corresponding to the first data does not exist. In general, it is easier to collect the training data without a label as compared with the training data with a label. According to the third embodiment, even when the training data does not have a label, it is possible to perform such training that the generalization performance of the model is improved.

[System]

Processing procedures, control procedures, specific names, and information including various kinds of data and parameters indicated in the aforementioned description and the drawings may be changed in any manner unless otherwise specified. The specific examples, distributions, numerical values, and so on described in the embodiments are merely examples and may be changed in any manner.

The constituent elements of the respective devices illustrated in the drawings are functional conceptual ones and not necessarily configured physically as illustrated in the drawings. For example, specific forms of distribution and integration of the respective devices are not limited to those illustrated in the drawings. For example, all or some of the devices may be configured to be distributed or integrated functionally or physically in any units depending on various loads, usage conditions, and so on. All or any part of processing functions performed by the respective devices may be implemented by a central processing unit (CPU) and a program to be analyzed and executed by the CPU, or may be implemented as hardware by wired logic.

[Hardware]

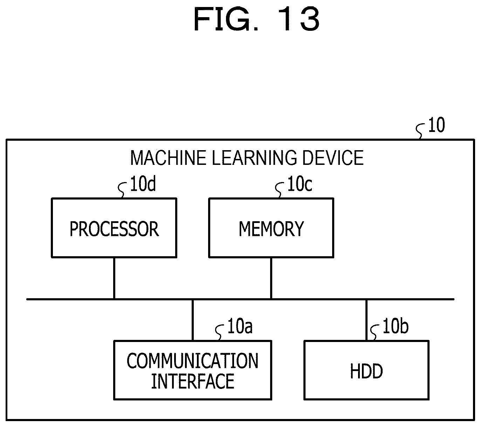

FIG. 13 is a diagram for describing an example of a hardware configuration. As illustrated in FIG. 13, the machine learning device 10 includes a communication interface 10a, a hard disk drive (HDD) 10b, a memory 10c, and a processor 10d. Respective parts illustrated in FIG. 13 are coupled to each other via a bus or the like.

The communication interface 10a is a network interface card or the like and performs communication with other servers. The HDD 10b stores a program or a database (DB) for operating the functions illustrated in FIG. 1.

The processor 10d reads the program for executing processing similar to each processing unit illustrated in FIG. 1 from the HDD 10b or the like and loads into the memory 10c to operate a process for executing each function described in, for example, FIG. 1. For example, this process executes the similar function to that of each unit included in the machine learning device 10. For example, the processor 10d reads out a program having similar functions to those of the extraction unit 131, the first calculation unit 132, the second calculation unit 133, and the training unit 134 from the HDD 10b or the like. The processor 10d executes the process for executing the similar processes to those of the extraction unit 131, the first calculation unit 132, the second calculation unit 133, the training unit 134, and the like. The processor 10d is, for example, a hardware circuit such as a CPU, an MPU, and an ASIC.

As described above, the machine learning device 10 operates as an information processing apparatus which executes a classification method by reading and executing a program. The machine learning device 10 may also implement the similar functions to those of the embodiments described above by reading the program from a recording medium by a medium reading device and executing the read program. The program is not limited to a program that is executed by the machine learning device 10. For example, the present invention may also be similarly applied to cases where another computer or a server executes the program and where the other computer and the server execute the program in cooperation with each other.

The program may be distributed via a network such as the Internet. The program may be recorded on a computer-readable recording medium such as a hard disk, a flexible disk (FD), a compact disc read-only memory (CD-ROM), a magneto-optical disk (MO), or a digital versatile disc (DVD) and may be executed after being read from the recording medium by a computer.

**Claims**

1. A machine learning method, comprising:

   calculating, by a computer, a first loss function based on a first distribution and a previously set second distribution, the first distribution being a distribution of a feature amount output from an intermediate layer when first data is input to an input layer of a model that has the input layer, the intermediate layer, and an output layer;
   calculating a second loss function based on second data and correct data corresponding to the first data, the second data being output from the output layer when the first data is input to the input layer of the model; and
   training the model based on both the first loss function and the second loss function.

2. The machine learning method according to claim 1, wherein
   the first loss function is a distance between the first distribution and the second distribution.

**3.** The machine learning method according to claim 1 or 2, wherein
the model is a neural network that has the input layer, multiple intermediate layers, and the output layer,
the output layer serves as a predetermined activating function,
the first distribution is a distribution of a feature amount output from an intermediate layer that is closest to the output layer among the multiple intermediate layers when the first data is input to the input layer of the neural network, and
the machine learning method further comprises:
training the model by an error back propagation method based on a loss function obtained by adding the first loss function and the second loss function.

**4.** The machine learning method according to claim 1 or 2, further comprising:
calculating the first loss function based on the first distribution and a second distribution set for correct data corresponding to the first data among distributions previously set for respective multiple correct data.

**5.** The machine learning method according to any one of claims 1 to 4, further comprising:
training the model based on only the first loss function when the correct data corresponding to the first data does not exist.

**6.** A program that causes a computer to execute a process comprising:

calculating a first loss function based on a first distribution and a previously set second distribution, the first distribution being a distribution of a feature amount output from an intermediate layer when first data is input to an input layer of a model that has the input layer, the intermediate layer, and an output layer;
calculating a second loss function based on second data and correct data corresponding to the first data, the second data being output from the output layer when the first data is input to the input layer of the model; and
training the model based on both the first loss function and the second loss function.

**7.** A machine learning device, comprising:

a first calculation unit that calculates a first loss function based on a first distribution and a previously set second distribution, the first distribution being a distribution of a feature amount output from an intermediate layer when first data is input to an input layer of a model that has the input layer, the intermediate layer, and an output layer;
a second calculation unit that calculates a second loss function based on second data and correct data corresponding to the first data, the second data being output from the output layer when the first data is input to the input layer of the model; and
a training unit that trains the model based on both the first loss function and the second loss function.

# FIG. 1

MACHINE LEARNING DEVICE — 10

INTERFACE UNIT — 11

STORAGE UNIT — 12
- TRAINING DATA — 121
- MODEL INFORMATION — 122
- TARGET DISTRIBUTION INFORMATION — 123

CONTROL UNIT — 13
- EXTRACTION UNIT — 131
- FIRST CALCULATION UNIT — 132
- SECOND CALCULATION UNIT — 133
- TRAINING UNIT — 134

# FIG. 2

FIG. 3

# FIG. 4

START

$\varsigma$S101

EXTRACT FEATURE AMOUNT AS INPUT DATA

$\varsigma$S102

INPUT INPUT DATA TO INPUT LAYER OF MODEL

$\varsigma$S103

CALCULATE INTER-DISTRIBUTION DISTANCE BETWEEN DISTRIBUTION OF FEATURE AMOUNT OUTPUT FROM INTERMEDIATE LAYER AND TARGET DISTRIBUTION

$\varsigma$S104

CALCULATE cross entropy OF OUTPUT DATA OUTPUT FROM OUTPUT LAYER RELATIVE TO LABEL DATA

$\varsigma$S105

MODEL BASED ON LOSS FUNCTION IN WHICH INTER-DISTRIBUTION DISTANCE IS ADDED TO cross entropy

END

FIG. 5

INPUT SPACE

DNN

Softmax

FEATURE SPACE

FIG. 6

INPUT SPACE

DNN

Softmax

FEATURE SPACE

# FIG. 7

|  | PRECISION (%) |
|---|---|
| WITHOUT REGULARIZATION (RELATED ART) | 65.57 |
| WITH REGULARIZATION (PRESENT EMBODIMENT) | 70.69 |

# FIG. 8

# FIG. 9

# FIG. 10

# FIG. 11

```
                    ┌─────────────┐
                    │    START    │
                    └─────────────┘
                           │
                           ▼            ⌇S201
    ┌──────────────────────────────────────────────┐
    │    EXTRACT FEATURE AMOUNT AS INPUT DATA       │
    └──────────────────────────────────────────────┘
                           │
                           ▼            ⌇S202
    ┌──────────────────────────────────────────────┐
    │    INPUT INPUT DATA TO INPUT LAYER OF MODEL   │
    └──────────────────────────────────────────────┘
                           │
                           ▼            ⌇S203a
    ┌──────────────────────────────────────────────┐
    │  SELECT TARGET DISTRIBUTION PREVIOUSLY SET FOR│
    │    LABEL CORRESPONDING TO INPUT DATA          │
    └──────────────────────────────────────────────┘
                           │
                           ▼            ⌇S203b
    ┌──────────────────────────────────────────────┐
    │ CALCULATE INTER-DISTRIBUTION DISTANCE BETWEEN │
    │ DISTRIBUTION OF FEATURE AMOUNT OUTPUT FROM    │
    │ INTERMEDIATE LAYER AND SELECTED TARGET        │
    │                DISTRIBUTION                   │
    └──────────────────────────────────────────────┘
                           │
                           ▼            ⌇S204
    ┌──────────────────────────────────────────────┐
    │ CALCULATE cross entropy OF OUTPUT DATA OUTPUT │
    │  FROM OUTPUT LAYER RELATIVE TO LABEL DATA     │
    └──────────────────────────────────────────────┘
                           │
                           ▼            ⌇S205
    ┌──────────────────────────────────────────────┐
    │ TRAIN MODEL BASED ON LOSS FUNCTION IN WHICH   │
    │ INTER-DISTRIBUTION DISTANCE IS ADDED TO cross │
    │                  entropy                      │
    └──────────────────────────────────────────────┘
                           │
                           ▼
                    ┌─────────────┐
                    │     END     │
                    └─────────────┘
```

# FIG. 12

START

S301
EXTRACT FEATURE AMOUNT AS INPUT DATA

S302
INPUT INPUT DATA TO INPUT LAYER OF MODEL

S303
CALCULATE INTER-DISTRIBUTION DISTANCE BETWEEN DISTRIBUTION OF FEATURE AMOUNT OUTPUT FROM INTERMEDIATE LAYER AND TARGET DISTRIBUTION

S304a
DOES LABEL CORRESPONDING TO INPUT DATA EXIST?

NO

S305a
TRAIN MODEL BASED ON INTER-DISTRIBUTION DISTANCE

YES

S304b
CALCULATE cross entropy OF OUTPUT DATA OUTPUT FROM OUTPUT LAYER RELATIVE TO LABEL DATA

S305
TRAIN MODEL BASED ON LOSS FUNCTION IN WHICH INTER-DISTRIBUTION DISTANCE IS ADDED TO cross entropy

END

# FIG. 13

Europäisches
Patentamt

European
Patent Office

Office européen
des brevets

# EUROPEAN SEARCH REPORT

Application Number

EP 20 18 4191

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/199743 A1 (BOSCH GMBH ROBERT [DE]) 27 June 2019 (2019-06-27) | 1-4,6,7 | INV. G06N3/08 |
| A | * paragraphs [0039] - [0049]; figure 2 * | 5 | |
| X | MINGSHENG LONG ET AL.: "Learning Transferable Features with Deep Adaptation Networks", 32ND INTERNATIONAL CONFERENCE ON MACHINE LEARNING, PROCEEDINGS OF MACHINE LEARNING RESEARCH, PMLR, vol. 37, 7 July 2015 (2015-07-07), pages 97-105, XP055641399, Lille, France * Sections 3-3.2 and 4.1 * * figure 1 * | 1-7 | |

| | |
|---|---|
| TECHNICAL FIELDS SEARCHED (IPC) | |
| G06N | |

The present search report has been drawn up for all claims

| Place of search | Date of completion of the search | Examiner |
|---|---|---|
| The Hague | 12 December 2020 | Millet, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 18 4191

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2020

| Patent document cited in search report | Publication date | Patent family member(s) | Publication date |
|---|---|---|---|
| US 2019199743 A1 | 27-06-2019 | CN 110022291 A<br>DE 102017223751 A1<br>US 2019199743 A1 | 16-07-2019<br>27-06-2019<br>27-06-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2307153 A
- JP 5197701 A
- JP 2017097585 A